(19) Europäisches Patentamt / European Patent Office / Office européen des brevets

(11) **EP 4 645 638 A1**

(12) **EUROPEAN PATENT APPLICATION**
published in accordance with Art. 153(4) EPC

(43) Date of publication:
**05.11.2025 Bulletin 2025/45**

(21) Application number: **24822594.8**

(22) Date of filing: **04.06.2024**

(51) International Patent Classification (IPC):
**H02J 7/00** $^{(2006.01)}$     **H01M 10/44** $^{(2006.01)}$

(52) Cooperative Patent Classification (CPC):
**H01M 10/44; H02J 7/00;** Y02E 60/10

(86) International application number:
**PCT/CN2024/097217**

(87) International publication number:
**WO 2024/255643 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023   CN 202310714508**

(71) Applicant: **ZTE CORPORATION**
**Shenzhen, Guangdong 518057 (CN)**

(72) Inventor: **GONG, Yong**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **CHARGING CONTROL METHOD, TERMINAL, COMPUTER READABLE MEDIUM**

(57)     A charging control method comprises the steps: S1, obtaining current impedance values of a set of impedance parameters of a battery, wherein the set of impedance parameters comprises at least one impedance parameter; S2, determining a current index in an electrochemical impedance spectrum data model according to charging state information of the battery; S3, comparing the current impedance values with a preset impedance parameter value corresponding to the current index, wherein the electrochemical impedance spectrum data model comprises preset impedance parameter values of the set of impedance parameters corresponding to different indexes; and S4, determining a charging current according to a comparison result. According to the method, rapid charging can be implemented while the service life and safety of the battery are ensured. A terminal and a computer-readable medium are further included.

S1
Obtain a present impedance value of an impedance parameter set of a battery, where the impedance parameter set includes at least one impedance parameter

S2
Determine, based on charging state information of the battery, a present index in an electrochemical impedance spectrum data model

S3
Compare the present impedance value with a preset impedance parameter value corresponding to the present index, where the electrochemical impedance spectrum data model includes preset impedance parameter values of the impedance parameter set corresponding to different indexes

S4
Determine a charging current based on a comparison result

FIG. 1

EP 4 645 638 A1

**Description**

CROSS-REFERENCE TO RELATED APPLICATIONS

This application claims priority to the patent application No. 202310714508.7 filed with the CNIPA on June 15, 2023, which is incorporated by reference hereby in its entirety.

TECHNICAL FIELD

The present disclosure relates to, but is not limited to, the technical field of charging.

BACKGROUND

Batteries are widely used in daily life, and the fast charge technology has become a key technology for improving the use experience of users. The fast charge technology mainly includes high-voltage fast charge, low-voltage high-current fast charge, and the like. During fast charge, the current entering the battery will increase, causing an increased temperature of the battery due to heat loss. A battery kept in a high-temperature state for a long time may result in accelerated aging and impaired battery life while also bringing safety risks.

With the development of the fast charge technology, the power for fast charge is continuously increased, and the problems with service life and safety caused by the temperature rise in the battery due to fast charge are more prominent. How to implement fast charge without affecting the battery life and ensuring safety has become an important direction for industrial research.

SUMMARY

Embodiments of the present disclosure provide a charging control method, a terminal, and a computer readable medium.

In a first aspect, an embodiment of the present disclosure provides a charging control method, including: obtaining a present impedance value of an impedance parameter set of a battery, wherein the impedance parameter set includes at least one impedance parameter; determining, based on charging state information of the battery, a present index in an electrochemical impedance spectrum data model; comparing the present impedance value with a preset impedance parameter value corresponding to the present index, wherein the electrochemical impedance spectrum data model includes preset impedance parameter values of the impedance parameter set corresponding to different indexes; and determining a charging current based on a comparison result.

In a second aspect, an embodiment of the present disclosure provides a terminal, including: one or more processors; a storage device having one or more programs stored thereon which, when executed by the one or more processors, cause the one or more processors to implement the charging control method in the first aspect of the embodiments of the present disclosure.

In a third aspect, an embodiment of the present disclosure provides a computer readable medium storing a computer program thereon which, when executed by a processor, causes the charging control method in the first aspect of the embodiments of the present disclosure to be implemented.

BRIEF DESCRIPTION OF DRAWINGS

FIG. 1 is a schematic flowchart of a charging control method according to an embodiment of the present disclosure;
FIG. 2 is a schematic flowchart illustrating some operations in another charging control method according to an embodiment of the present disclosure;
FIG. 3 is a schematic flowchart illustrating some operations in still another charging control method according to an embodiment of the present disclosure;
FIG. 4 is a schematic flowchart illustrating some operations in yet another charging control method according to an embodiment of the present disclosure;
FIG. 5 is a schematic diagram of an equivalent circuit of a battery according to an embodiment of the present disclosure;
FIG. 6 is a schematic diagram of an impedance in a battery according to an embodiment of the present disclosure;
FIG. 7 is a schematic flowchart illustrating some operations in yet another charging control method according to an embodiment of the present disclosure;

FIG. 8 is a schematic block diagram of a terminal according to an embodiment of the present disclosure;

FIG. 9 is a schematic block diagram of a computer readable medium according to an embodiment of the present disclosure;

FIG. 10 is a schematic diagram of a system architecture for fast charge according to an embodiment of the present disclosure;

FIG. 11 is a schematic diagram illustrating charging control according to an embodiment; and

FIG. 12 is a schematic diagram illustrating charging control according to another embodiment.

DETAIL DESCRIPTION OF EMBODIMENTS

To improve understanding of the technical solution of the present disclosure for those skilled in the art, the charging control method, the terminal and the computer readable medium of the present disclosure will be described in detail below in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

In some existing technologies, the core of the fast charge technology lies in increasing an output power of the charger within a charging curve range supported by the battery, thereby increasing the charging current of the battery and reducing the charging time. The charger enables high-power output in two modes: a high output voltage mode and a low-voltage high-current mode.

The high output voltage mode includes increasing the output power of the charger by increasing an output voltage of the charger. Under the same input current, a charging conversion chip in the terminal obtains higher input power due to the high input voltage, and converts it into a higher output current, so that the battery obtains a higher charging current and the charging time is shortened. In the charging process, a charging algorithm implementation control unit in the terminal informs the charger to output a proper high voltage based on the detected states of the battery and the charging conversion chip; and the high voltage is delivered to the charging conversion chip in the terminal, and converted into a voltage and the corresponding current suitable for the battery to charge the battery.

The low-voltage high-current mode includes increasing the output power of the charger by increasing an output current of the charger, where the battery can also obtain a higher charging current. The low-voltage high-current mode is mainly implemented by direct charging, in which a charger directly charges a battery. When the charging process enters a fast charge stage, the charging algorithm implementation control unit in the terminal informs, based on the detected state of the battery, the charger to output proper current and voltage to directly charge the battery.

In the charging process, the charging current adjusting processes in the two modes are mainly based on a battery charging curve provided by a battery manufacturer, while lacking monitoring of the charging state of the battery. Chemical reactions of an electrolyte, an active material, and the like in the battery may experience irreversibly changes under the influence of temperature, and once the charging current exceeds an acceptable range, aging of the battery may be accelerated, and the battery life may be shortened. For example, the lithium battery is a high energy density battery, and without monitoring of the state of the lithium battery, heat generated by high-current charging may cause potential safety hazards of the lithium battery when an internal impedance of the lithium battery exceeds a certain threshold.

Some application scenarios of batteries adopt a combination of a plurality of batteries connected in series or in series/parallel, and such a combination adopts merely one overcharge/overdischarge protection unit. Compared with the case of a single battery, the protection unit cannot provide protection according to a state change of each cell. In some existing technologies, voltage monitoring is performed on each cell in the combination to prevent overcharge caused by abnormality of a single cell during charging, but since the resistance of the electrolyte and the transfer resistance of ions in the battery and the like are not monitored, there are still potential safety hazards caused by internal heat of the battery due to an overhigh current in the charging process.

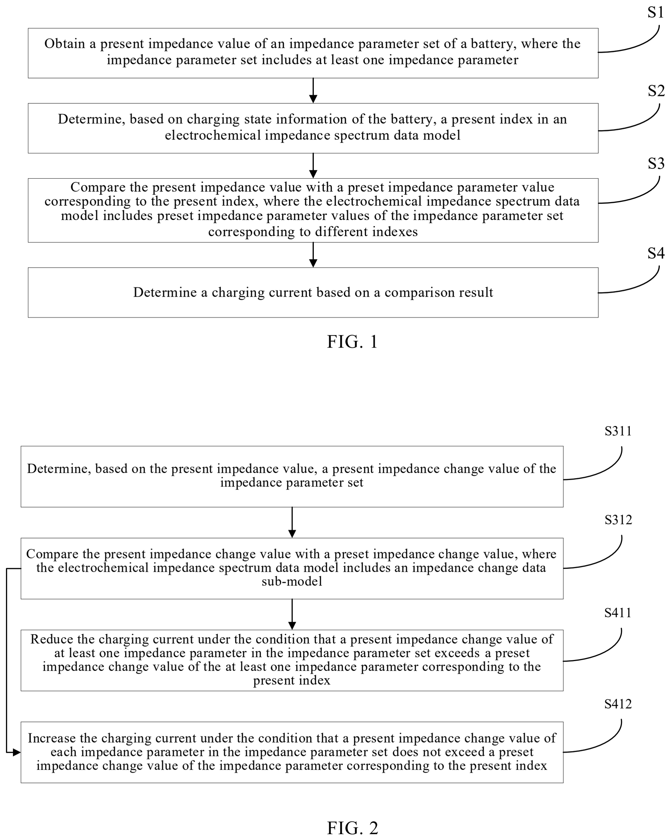

In view of this, in a first aspect, referring to FIG. 1, an embodiment of the present disclosure provides a charging control method, which may include the following operations S1 to S4.

At S1, obtaining a present impedance value of an impedance parameter set of a battery, where the impedance parameter set includes at least one impedance parameter.

At S2, determining, based on charging state information of the battery, a present index in an electrochemical impedance spectrum data model.

At S3, comparing the present impedance value with a preset impedance parameter value corresponding to the present index, where the electrochemical impedance spectrum data model includes preset impedance parameter values of the impedance parameter set corresponding to different indexes.

At S4, determining a charging current based on a comparison result.

The impedance parameters forming the impedance parameter set of the battery are not particularly limited in the embodiments of the present disclosure. For example, the impedance parameter set consists of at least one of an electrolyte impedance, a separator impedance, a charge transfer impedance, and a diffusion impedance, and the like.

In an embodiment of the present disclosure, the present impedance value(s) of the impedance parameter set refer to a value(s) of currently monitored impedance parameter(s) of the battery.

In an embodiment of the present disclosure, an electrochemical impedance spectrum data model is established in advance in conjunction with impedance characteristics of the battery, in which preset impedance parameter values corresponding to the impedance parameter set of the battery are determined. When the battery is charged, by monitoring the battery, a deviation degree of present impedance value of each impedance parameter relative to the preset impedance parameter value of the impedance parameter in the electrochemical impedance spectrum data model is obtained, which can reflect changes in an internal state of the battery.

The preset impedance parameter value of the impedance parameter is not particularly limited in the embodiments of the present disclosure. For example, the preset impedance parameter value includes, but is not limited to, a preset impedance value, a preset impedance change value, or the like.

In the embodiments of the present disclosure, an index represents a charging state of the battery, e.g., a charge cycle number, a battery voltage, or the like. In an embodiment of the present disclosure, when the present impedance value is compared with the preset impedance parameter value in the electrochemical impedance spectrum data model, the present impedance value is compared with the preset impedance parameter value corresponding to the same charging state. For example, with charge cycle number + battery voltage as an index, given that a present charge cycle number is 22, and a present battery voltage is 3.5V, then the preset impedance parameter value corresponding to the charge cycle number 22 and the battery voltage 3.5V is searched in the electrochemical impedance spectrum data model for comparison.

In an embodiment of the present disclosure, by comparing the present impedance value with the preset impedance parameter value in the electrochemical impedance spectrum data model, a change in the internal state of the battery can be determined; and further, a charging current is determined according to the comparison result, i.e., the charging current is adjusted based on the change in the internal state of the battery. For example, when the comparison result indicates that the internal state of the battery is deteriorated, the charging current is decreased; and when the comparison result indicates that the internal state of the battery is not deteriorated, the charging current is increased.

In the embodiment of the present disclosure, by monitoring the internal state of the battery and adjusting the charging current based on the change in the internal state of the battery, a charging current which can not only reduce safety risks caused by deterioration of the internal state of the battery, but also minimize the charging time can be obtained, so that fast charge can be implemented while ensuring the battery life and safety.

The preset impedance parameter value in the electrochemical impedance spectrum data model is not particularly limited in the embodiments of the present disclosure.

In some embodiments, the preset impedance parameter value includes a preset impedance change value, which is a variation value of the electrochemical impedance of the battery when the battery is charged with a maximum current supported by the battery.

Accordingly, in some embodiments, referring to FIG. 2, comparing the present impedance value with the preset impedance parameter value corresponding to the present index includes the following operations S311 to S312.

At S311, determining, based on the present impedance value, a present impedance change value of the impedance parameter set.

At S312, comparing the present impedance change value with a preset impedance change value corresponding to the present index, where the electrochemical impedance spectrum data model includes an impedance change data sub-model in which the preset impedance parameter value includes the preset impedance change value.

The impedance change data sub-model is not particularly limited in the embodiments of the present disclosure. In some embodiments, the impedance change data sub-model is in the form shown in table 1.

Table 1

| Record | Charge cycles | Battery voltage | $\Delta Rb$ | $\Delta Z_{sei}$ | $\Delta Z_{ct}$ | $\Delta Z_w$ |
|---|---|---|---|---|---|---|
| Y | $N^{th}$ to $X^{th}$ | 3.3V (Imax) | $B_{1y\_3.3}$ | $B_{2y\_3.3}$ | $B_{3y\_3.3}$ | $B_{4y\_3.3}$ |
| | | $\vdots$ | $\vdots$ | $\vdots$ | $\vdots$ | $\vdots$ |
| | | 4.35V (Imax) | $B_{1y\_4.35}$ | $B_{2y\_4.35}$ | $B_{3y\_4.35}$ | $B_{4y\_4.35}$ |

In table 1, $\Delta Rb$ represents a variation value of the electrolyte impedance, $\Delta z_{sei}$ represents a variation value of the separator impedance, $\Delta z_{ct}$ represents a variation value of the charge transfer impedance, and $\Delta Z_w$ represents a variation value of the diffusion impedance; B represents the corresponding variation value, for example, $B_{1y\_3.3}$ represents a variation value of the electrolyte impedance in record Y at a battery voltage of 3.3V, $B_{2y\_3.3}$ represents a variation value of the separator impedance in record Y at a battery voltage of 3.3V, $B_{3y\_3.3}$ represents a variation value of the charge transfer impedance in record Y at a battery voltage of 3.3V, and $B_{4y\_3.3}$ represents a variation value of the diffusion impedance in record Y at a battery voltage of 3.3V; and the record Y corresponds to the $N^{th}$ to $X^{th}$ charge cycles, representing one record of an electrochemical impedance change from the $N^{th}$ to $X^{th}$ charge cycles. In an embodiment of the present disclosure, since the internal state of the battery is more likely to deteriorate and deteriorate to a greater degree when the battery is charged with the maximum current supported by the battery, when the variation value of the electrochemical impedance of the battery when the battery is charged with the maximum current supported by the battery is used as the preset impedance change value, it may serve as an upper limit for monitoring electrochemical impedance changes of the battery. When the battery is charged, the internal state of the battery is determined to be deteriorated in spite of the magnitude of the charging current if the electrochemical impedance change of the battery exceeds the upper limit; and if the electrochemical impedance change of the battery does not exceed the upper limit, it may indicate that the internal state of the battery is not deteriorated.

Accordingly, in some embodiments, referring to FIG. 2, determining the charging current based on the comparison result includes the following operations S411 to S412.

At S411, reducing the charging current under the condition that a present impedance change value of at least one impedance parameter in the impedance parameter set exceeds a preset impedance change value of the impedance parameter corresponding to the present index.

At S412, increasing the charging current under the condition that the present impedance change value of each impedance parameter in the impedance parameter set does not exceed the preset impedance change value of the impedance parameter corresponding to the present index.

In an embodiment of the present disclosure, when the present impedance change value(s) of any one or more impedance parameters exceed the corresponding preset impedance change value(s), it indicates that the internal state of the battery is deteriorated, and the charging current is reduced to alleviate safety risks; and when the present impedance change value of each impedance parameter does not exceed the corresponding preset impedance change value, it indicates that the internal state of the battery is not deteriorated, so that the charging current can be increased to enable fast charge and reduce the charging time.

In an embodiment of the present disclosure, the charging current is gradually reduced until the present impedance change value is smaller than the preset impedance change value; or the charging current is gradually increased to a maximum value with the present impedance change value not exceeding the preset impedance change value.

In the embodiment of the present disclosure, through operations S411 and S412, a charging current which can not only reduce safety risks caused by deterioration of the internal state of the battery, but also minimize the charging time can be obtained.

In some embodiments, under the condition that the present impedance change value of each impedance parameter does not exceed the corresponding preset impedance change value, the charging current is gradually increased; and when the charging current is increased to a maximum current supported by the present charging, and still the present impedance change value of each impedance parameter does not exceed the corresponding preset impedance change value, the battery is charged with the maximum current supported by the present charging.

Accordingly, in some embodiments, increasing the charging current under the condition that the present impedance change value of each impedance parameter in the impedance parameter set does not exceed the preset impedance change value of the impedance parameter corresponding to the present index includes:

under the condition that the charging current is increased to a current peak value, and the present impedance change value of each impedance parameter in the impedance parameter set does not exceed the preset impedance change value of the impedance parameter corresponding to the present index, keeping the charging current at the current peak value.

In an embodiment of the present disclosure, the current peak value is the maximum current supported by the present charging. In some embodiments, the maximum current supported by the present charging is a smaller one of a maximum value of the current converted and output by the terminal from the charging power supplied by the charger, or a maximum value of the charging current allowed by the charging curve of the battery.

In the embodiments of the present disclosure, the charging current upon starting of charging may vary depending on the internal state of the battery upon starting of charging. Different charging currents upon starting of charging correspond to different adjustment modes of charging current.

In some embodiments, charging is started at the current peak value.

Accordingly, in some embodiments, determining the charging current based on the comparison result includes: if the charging current is equal to the current peak value when charging is started, reducing the charging current under the condition that the present impedance change value of at least one impedance parameter in the impedance parameter set exceeds the preset impedance change value of the impedance parameter corresponding to the present index.

In an embodiment of the present disclosure, if the charging current is equal to the current peak value when charging is started, and the present impedance change value of each impedance parameter in the impedance parameter set does not exceed the preset impedance change value, the charging current is kept at the current peak value to charge the battery.

In some embodiments, charging is started at a small current.

Accordingly, in some embodiments, determining the charging current based on the comparison result includes:

if the charging current is lower than the current peak value when charging is started, increasing the charging current under the condition that the present impedance change value of each impedance parameter in the impedance parameter set does not exceed the preset impedance change value of the impedance parameter corresponding to the present index; and

if the charging current is lower than the current peak value when charging is started, stopping charging under the condition that the present impedance change value of at least one impedance parameter in the impedance parameter set exceeds the preset impedance change value of the impedance parameter corresponding to the present index.

In some embodiments, an abnormity is reported under the condition that the present impedance change value of at least one impedance parameter in the impedance parameter set exceeds the preset impedance change value of the impedance parameter corresponding to the present index.

In an embodiment of the present disclosure, when charging is started at a small current, if the present impedance change values of any one or more impedance parameters exceed the corresponding preset impedance change values, it indicates that the internal state of the battery has been deteriorated, and stopping charging is beneficial to avoiding safety risks.

In some embodiments, the preset impedance parameter value includes a preset impedance value.

Accordingly, in some embodiments, comparing the present impedance value with the preset impedance parameter value corresponding to the present index may include:

comparing the present impedance value with the preset impedance value corresponding to the present index, where the electrochemical impedance spectrum data model includes an impedance spectrum data sub-model in which the preset impedance parameter value includes a preset impedance value.

The impedance spectrum data sub-model is not particularly limited in the embodiments of the present disclosure. In some embodiments, the impedance spectrum data sub-model is in the form shown in table 2.

Table 2

| Charge cycle | State | Battery voltage | $Rb(m\Omega)$ | $Z_{sei}(m\Omega)$ | $Z_{ct}(m\Omega)$ | $Z_w(m\Omega)$ |
|---|---|---|---|---|---|---|
| $N^{th}$ | Charging | 3.3V | $A_{1n\_3.3}$ | $A_{2n\_3.3}$ | $A_{3n\_3.3}$ | $A_{4n\_3.3}$ |
| | | $\vdots$ | $\vdots$ | $\vdots$ | $\vdots$ | $\vdots$ |
| | | 4.35V | $A_{1n\_4.35}$ | $A_{2n\_4.35}$ | $A_{3n\_4.35}$ | $A_{4n\_4.35}$ |

In table 2, Rb represents the electrolyte impedance, $Z_{sei}$ represents the separator impedance, $Z_{ct}$ represents the charge transfer impedance, and $Z_w$ represents the diffusion impedance; and A represents the corresponding impedance value, for example, $A_{1n\_3.3}$ represents an electrolyte impedance value at a battery voltage of 3.3V in the $N^{th}$ charge cycle, $A_{2n\_3.3}$ represents a separator impedance value at a battery voltage of 3.3V in the $N^{th}$ charge cycle, $A_{3n\_3.3}$ represents a charge transfer impedance value at a battery voltage of 3.3V in the $N^{th}$ charge cycle, and $A_{4n\_3.3}$ represents a diffusion impedance value at a battery voltage of 3.3V in the $N^{th}$ charge cycle.

In an embodiment of the present disclosure, temperature changes of the environment where the battery is located may affect transfer of charges inside the battery and deintercalation of ions in an electrode active material, and based on the impedance spectrum data sub-model, an adjustment proportion of the electrochemical impedance of the battery with the ambient temperature is determined, and then correction parameters corresponding to different ambient temperatures are determined and used to correct the preset impedance values in the impedance spectrum data sub-model based on the present ambient temperature.

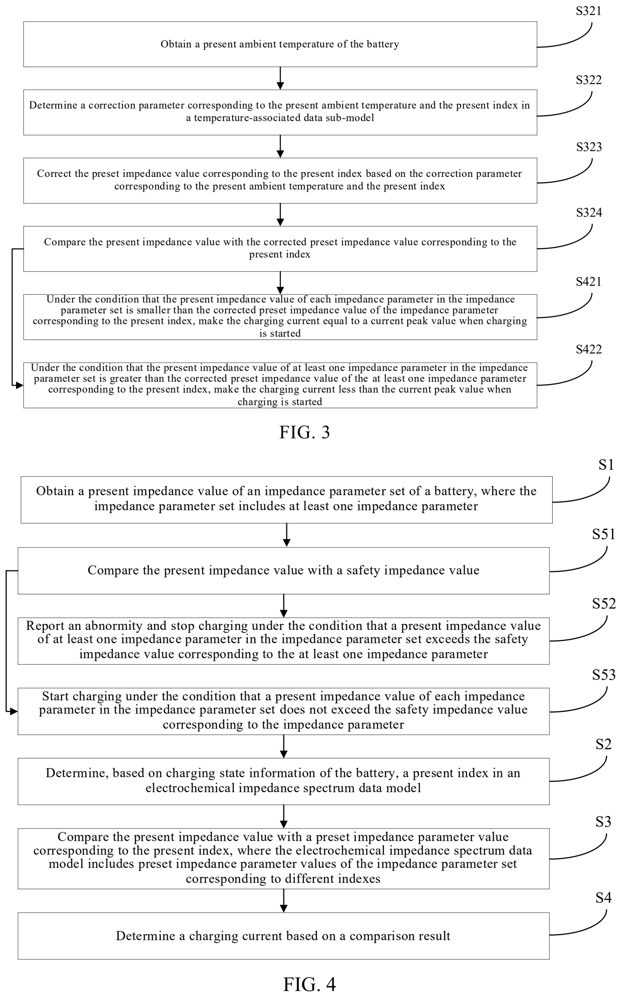

Accordingly, in some embodiments, referring to FIG. 3, comparing the present impedance value with the preset impedance value corresponding to the present index includes the following operations S321 to S324.

At S321, obtaining a present ambient temperature of the battery.

At S322, determining a correction parameter corresponding to the present ambient temperature and the present index in a temperature-associated data sub-model, where the electrochemical impedance spectrum data model includes the temperature-associated data sub-model, and the temperature-associated data sub-model includes correction parameters corresponding to different ambient temperatures and different indexes.

At S323, correcting the preset impedance value corresponding to the present index based on the correction parameter corresponding to the present ambient temperature and the present index.

At S324, comparing the present impedance value with the corrected preset impedance value corresponding to the present index.

In the embodiment of the present disclosure, the preset impedance parameter value is corrected by using the correction parameter, and then the present impedance value is compared with the corrected preset impedance value, so that the internal state of the battery at the present ambient temperature can be more accurately reflected, and thus the charging current can be more accurately adjusted.

The temperature-associated data sub-model is not particularly limited in the embodiments of the present disclosure. In some embodiments, the temperature-associated data sub-model is in the form shown in table 3.

Table 3

| Record | Battery voltage | Rb(mΩ) | $Z_{sei}$(mΩ) | $Z_{ct}$(mΩ) | $Z_w$(mΩ) |
|---|---|---|---|---|---|
| M | 3.3V | $K_{1m\_3.3}$ | $K_{2m\_3.3}$ | $K_{3m\_3.3}$ | $K_{4m\_3.3}$ |
| | ⋮ | ⋮ | ⋮ | ⋮ | ⋮ |
| | 4.35V | $K_{1m\_4.35}$ | K2m 4.35 | K3m 4.35 | K4m 4.35 |

In table 2, Rb represents the electrolyte impedance, $Z_{sei}$ represents the separator impedance, $Z_{ct}$ represents the charge transfer impedance, and $Z_w$ represents the diffusion impedance; and K represents the corresponding correction parameter, for example, $K_{1m\_3.3}$ represents a correction parameter for the electrolyte impedance in record M at a battery voltage of 3.3V, $K_{2m\_3.3}$ represents a correction parameter for the separator impedance in record M at a battery voltage of 3.3V, $K_{3m\_3.3}$ represents a correction parameter for the charge transfer impedance in record M at a battery voltage of 3.3V, and $K_{4m\_3.3}$ represents a correction parameter for the diffusion impedance in record M at a battery voltage of 3.3V.

How to correct the preset impedance value corresponding to the present index based on the correction parameter corresponding to the present ambient temperature and the present index is not particularly limited in the embodiments of the present disclosure. For example, taking the case of determining the preset impedance value in the impedance spectrum data sub-model at an ambient temperature of 25 °C as an example, the preset impedance value is corrected by:

$$K_m \times \left( \frac{\theta - 25}{25} \right) = \frac{Z'(\theta) - Z}{Z}$$

where $K_m$ is a correction parameter, $\theta$ is the present ambient temperature, Z represents the preset impedance value in the impedance spectrum data sub-model, and $Z'(\theta)$ is the corrected preset impedance value.

In some embodiments, referring to FIG. 3, determining the charging current based on the comparison result includes the following operations S421 to S422.

At S421, under the condition that the present impedance value of each impedance parameter in the impedance parameter set is smaller than the corrected preset impedance value of the impedance parameter corresponding to the present index, making the charging current equal to a current peak value when charging is started.

At S422, under the condition that the present impedance value of at least one impedance parameter in the impedance parameter set is greater than the corrected preset impedance value of the impedance parameter corresponding to the present index, making the charging current less than the current peak value when charging is started.

In some embodiments, referring to FIG. 4, after obtaining the present impedance value of the impedance parameter set of the battery, the charging control method further includes the following operations S51 to S53.

At S51, comparing the present impedance value with a safety impedance value.

At S52, stopping charging under the condition that the present impedance value of at least one impedance parameter in the impedance parameter set exceeds the safety impedance value corresponding to the impedance parameter.

At S53, starting charging under the condition that the present impedance value of each impedance parameter in the impedance parameter set does not exceed the safety impedance value corresponding to the impedance parameter.

In some embodiments, an abnormality is reported under the condition that the present impedance value of at least one impedance parameter in the impedance parameter set exceeds the safety impedance value corresponding to the impedance parameter.

In an embodiment of the present disclosure, charging is stopped when the present impedance values of any one or more impedance parameters exceed the safety impedance, and charging is started when the present impedance value of each impedance parameter does not exceed the safety impedance, which is beneficial to reducing safety risks.

The safety impedance is not particularly limited in the embodiments of the present disclosure. For example, the safety impedance is provided by the battery manufacturer or set empirically.

The index in the electrochemical impedance spectrum data model is not particularly limited in the embodiments of the present disclosure.

In some embodiments, the index in the electrochemical impedance spectrum data model includes at least one of a battery voltage and a charge cycle number; and determining the present index based on charging state information of the battery includes:

determining at least one of a present battery voltage and a present charge cycle number of the battery to obtain the present index.

For example, as shown in table 2, charge cycle number + battery voltage is taken as an index.

In some embodiments, the index in the electrochemical impedance spectrum data model includes a charge cycle number; and the charging control method further includes:

obtaining the present charge cycle number when charging is started; and
updating the present charge cycle number when the charging is completed.

In the embodiment of the present disclosure, updating the charge cycle number means updating an aging degree of the battery; and by taking the charge cycle number as an index of the electrochemical impedance spectrum data model, the aging degree of the battery can be considered while the internal state of the battery is monitored, so that the internal state of the battery at the present ambient temperature can be more accurately reflected, and the charging current can be more accurately adjusted.

The impedance parameters forming the impedance parameter set are not particularly limited in the embodiments of the present disclosure.

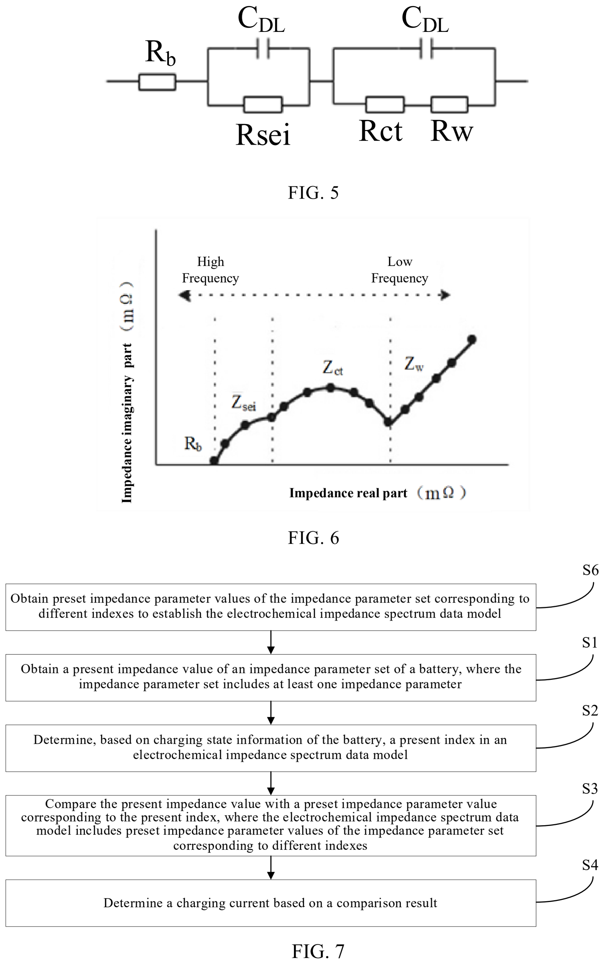

In some embodiments, the battery is equivalent to the circuit model shown in FIG. 5. In FIG. 5, $R_b$ represents an ohmic resistance corresponding to the electrolyte impedance in the battery; Rsei represents a separator resistance, Rct represents a charge transfer resistance, and $C_{DL}$ represents an electric double-layer capacitance; and Rw represents a diffusion resistance of ions in the electrode material.

In an embodiment of the present disclosure, a sine wave excitation current (excitation signal) at a certain frequency is applied to the battery, so that a sine wave voltage signal can be detected at both ends of the battery, and a ratio of the detected voltage signals to the excitation current is an impedance value of the battery. Referring to the equivalent circuit of FIG. 5, when the excitation signal is a high frequency signal (e.g., over 1KHz), the impedance of $R_b$ will dominate; when the excitation signal is an intermediate frequency signal (e.g., 1Hz to 1KHz), the impedances of Rsei and $C_{DL}$ and the impedances of Rct and $C_{DL}$ will dominate; and when the excitation signal is a low frequency signal (e.g., below 1Hz), the impedance of Rw will dominate. FIG. 6 shows a correspondence relationship between electrochemical impedances of the battery and frequencies of the excitation signal, where each point represents an impedance value corresponding to a certain frequency of excitation signal, and as the frequency of the excitation signal increases, the electrochemical impedance of the battery is manifested as the electrolyte impedance Rb, the separator impedance $Z_{sei}$, the charge transfer impedance $Z_{ct}$, and the diffusion impedance $Z_w$ sequentially.

Accordingly, in some embodiments, the impedance parameters forming the impedance parameter set include at least one of an electrolyte impedance, a separator impedance, a charge transfer impedance, and a diffusion impedance.

In some embodiments, referring to FIG. 7, the charging control method further includes the following operation S6.

At S6, obtaining preset impedance parameter values of the impedance parameter set corresponding to different indexes to establish the electrochemical impedance spectrum data model.

In some embodiments, establishing the electrochemical impedance spectrum data model includes:

obtaining preset impedance values of the impedance parameter set corresponding to different charge cycle numbers and different battery voltages, to establish an impedance spectrum data sub-model; and

establishing an impedance change data sub-model based on the impedance spectrum data sub-model, where the impedance change data sub-model includes preset impedance change values of the impedance parameter set corresponding to different charge cycle numbers and different battery voltages.

In some embodiments, establishing the electrochemical impedance spectrum data model further includes: establishing a temperature-associated data sub-model based on the impedance spectrum data sub-model, where the temperature-associated data sub-model includes correction parameters corresponding to different ambient temperatures and different battery voltages.

In some embodiments, the impedance spectrum data sub-model is in the form shown in table 2, the impedance change data sub-model is in the form shown in table 1, and the temperature-associated data sub-model is in the form shown in table 3. In other words, tables 1 to 3 together form the electrochemical impedance spectrum data model.

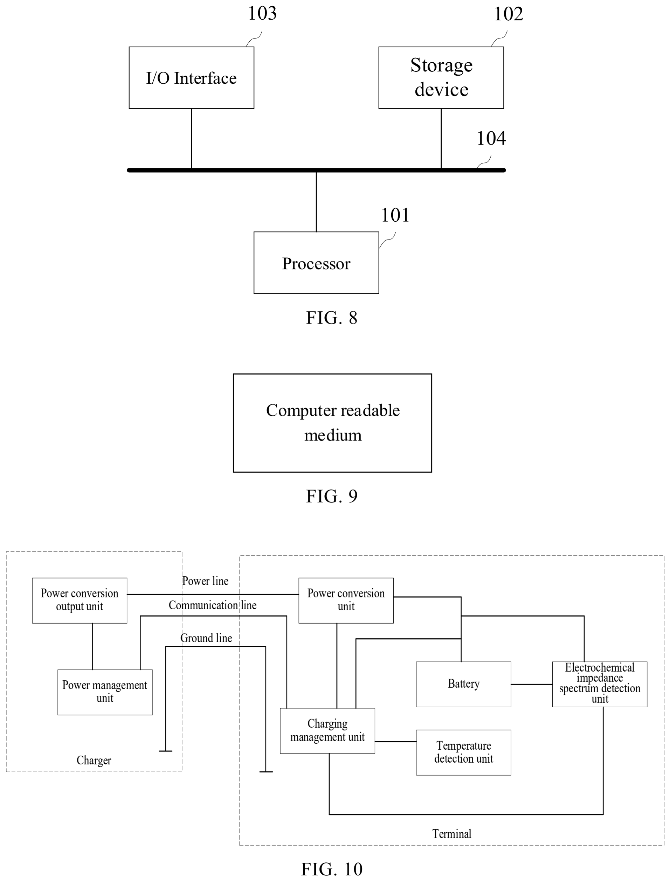

In a second aspect, referring to FIG. 8, an embodiment of the present disclosure provides a terminal, including: one or more processors 101; a storage device 102 having one or more programs stored thereon which, when executed by the one or more processors, cause the one or more processors to implement the charging control method in the first aspect of the embodiments of the present disclosure; and one or more I/O interfaces 103 connected between the one or more processors and the storage device, and configured to enable information interaction between the processor and the storage device.

The processor 101 is a device with a data processing capability, including but not limited to, a central processing unit (CPU), or the like. The storage device 102 is a device with a data storage capability, including but not limited to, a random access memory (RAM, such as SDRAM, DDR, etc.), a read-only memory (ROM), an electrically erasable programmable read-only memory (EEPROM) or a flash memory (FLASH). The I/O interface (read/write interface) 103 is connected between the processor 101 and the storage device 102 to enable information interaction between the processor 101 and the storage device 102, and includes, but is not limited to, a data bus or the like.

In some embodiments, the processor 101, the storage device 102, and the I/O interface 103 are interconnected via a bus 104, and further connected to other components of a computing device.

In a fourth aspect, referring to FIG. 9, an embodiment of the present disclosure provides a computer readable medium storing a computer program thereon which, when executed by a processor, causes the charging control method in the first aspect of the embodiments of the present disclosure to be implemented.

To improve understanding of the technical solutions provided in the embodiments of the present disclosure for those skilled in the art, the technical solutions provided in the embodiments of the present disclosure will be further described in detail below with the help of exemplary embodiments.

First Exemplary Embodiment

FIG. 10 is a schematic diagram of a system architecture for fast charge according to the embodiment. In this embodiment, the system architecture for fast charge includes two parts, i.e., a charger and a terminal. The charger includes a power management unit and a power conversion output unit. The terminal includes a power conversion unit, a charging management unit, an electrochemical impedance spectrum detection unit, and a temperature detection unit. The charger is connected to the terminal via a charging cable consisting of a power line, a communication line, and a ground line.

In the charger: the power management unit is configured to perform communication and identification with a terminal to be charged before charging, and control the power conversion output unit based on communication information in a charging process; and the power conversion output unit is configured to output accurate voltage and current based on the communication information from the power management unit.

In the terminal: the charging management unit is configured to perform interactive identification with the charger, detect an ambient temperature and a voltage of the battery, control the electrochemical impedance spectrum unit to detect the battery, and control the power conversion unit to create suitable charging parameters in conjunction with an electrochemical impedance spectrum of the battery obtained through the detection; the power conversion unit is configured to convert the input voltage and current into voltage and current suitable for the battery based on the obtained charging parameters; the electrochemical impedance spectrum detection unit is configured to detect the electrochemical impedance spectrum of the battery; and the temperature detection unit is configured to detect an ambient temperature of the battery.

The power management unit of the charger is configured to perform identification and interaction with the terminal to be charged before charging, which not only indicates that the charger is capable of outputting specific power based on the requirement of the terminal, but also enables the knowledge of whether the terminal has a requirement for specific power outputting. When the communication and identification between the power management unit and the terminal to be charged fails, the power management unit controls the power conversion output unit to output power according to a standard specification of the charger. The power management unit may be a function circuit implemented by a microprocessor chip or a chip supporting a certain protocol (e.g., TYPE-C PD). The power conversion output unit may be implemented by a programmable power chip or a circuit supporting adjustable voltage and current.

The charging management unit in the terminal is configured to perform communication and interaction with the charger to acquire a power output capability of the charger; detect an ambient temperature of the battery by the temperature detection unit, and control the electrochemical impedance spectrum detection unit to detect an electrochemical impedance spectrum of the battery, which is then compared with a pre-established electrochemical impedance spectrum model table (electrochemical impedance spectrum data model) of the battery; and adjusting the charging current properly based on a deviation degree of the electrochemical impedance spectrum of the battery. The power conversion unit is configured to perform power conversion based on the received charging current parameter and the detected battery voltage parameter, and the input voltage and current.

The electrochemical impedance spectrum is a method for on-line detection of internal parameters of a battery. When a sine wave excitation current at a certain frequency is applied to the battery, a sine wave voltage signal can be detected at both ends of the battery, and changes in a ratio of the detected voltage signal to the excitation current form the electrochemical impedance spectrum of the battery.

The battery is equivalent to the circuit model shown in FIG. 5. In FIG. 5, $R_b$ represents an ohmic resistance corresponding to the electrolyte impedance in the battery; Rsei represents a separator resistance, Rct represents a charge transfer resistance, and $C_{DL}$ represents an electric double-layer capacitance; and Rw represents a diffusion resistance of ions in the electrode material. By applying a sine wave excitation current (excitation signal) at a certain frequency to the battery, a sine wave voltage signal can be detected at both ends of the battery, and a ratio of the detected voltage signals to the excitation current is an impedance value of the battery. Referring to the equivalent circuit of FIG. 5, when the excitation signal is a high frequency signal (e.g., over 1KHz), the impedance of Rb will dominate; when the excitation signal is an intermediate frequency signal (e.g., 1Hz to 1KHz), the impedances of Rsei and $C_{DL}$ and the impedances of Rct and $C_{DL}$ will dominate; and when the excitation signal is a low frequency signal (e.g., below 1Hz), the impedance of Rw will dominate. FIG. 6 shows a correspondence relationship between electrochemical impedances of the battery and frequencies of the excitation signal, where each point represents an impedance value corresponding to a certain frequency of excitation signal, and as the frequency of the excitation signal increases, the electrochemical impedance of the battery is manifested as the electrolyte impedance Rb, the separator impedance $Z_{sei}$, the charge transfer impedance $Z_{ct}$, and the diffusion impedance $Z_w$ sequentially.

Second Exemplary Embodiment

In this embodiment, taking a lithium battery as an example, and before starting fast charge of the lithium battery, an electrochemical impedance spectrum of the lithium battery is modeled. An impedance spectrum table (impedance spectrum data sub-model) of the lithium battery is established by considering impedance characteristics of the lithium battery, where a battery with a cut-off voltage of 4.35V and a discharge cut-off voltage of 3.3V in a natural environment with an initial temperature of 25 °C is taken as an example, as shown in table 4.

Table 4

| Charge cycle | State | Battery voltage | $Rb(m\Omega)$ | $Z_{sei}(m\Omega)$ | $Z_{ct}(m\Omega)$ | $Z_w(m\Omega)$ |
|---|---|---|---|---|---|---|
| $N^{th}$ | Charging | 3.3V | $A_{1n\_3.3}$ | $A_{2n\_3.3}$ | $A_{3n\_3.3}$ | $A_{4n\_3.3}$ |
| | | ⋮ | ⋮ | ⋮ | ⋮ | ⋮ |
| | | 4.35V | $A_{1n\_4.35}$ | A2n 4.35 | A3n 4.35 | A4n 4.35 |

In table 4, Rb represents the electrolyte impedance, $Z_{sei}$ represents the separator impedance, $Z_{ct}$ represents the charge transfer impedance, and $Z_w$ represents the diffusion impedance; and A represents the corresponding impedance value, for example, $A_{1n\_3.3}$ represents an electrolyte impedance value at a battery voltage of 3.3V in the $N^{th}$ charge cycle, $A_{2n\_3.3}$ represents a separator impedance value at a battery voltage of 3.3V in the $N^{th}$ charge cycle, $A_{3n\_3.3}$ represents a charge transfer impedance value at a battery voltage of 3.3V in the $N^{th}$ charge cycle, and $A_{4n\_3.3}$ represents a diffusion impedance value at a battery voltage of 3.3V in the $N^{th}$ charge cycle.

The electrochemical impedance changes of the lithium battery also characterize an aging process of the lithium battery, and the essence of the aging of the lithium battery is irreversible electrochemical changes. When the impedance spectrum table (impedance spectrum data sub-model) of the lithium battery is established, an impedance and current change table (impedance change data sub-model) is also established, as shown in table 5 below. Referring to the records in table 4, in a constant temperature environment of 25 °C, the battery is charged at the maximum charging current Imax supported by the lithium battery at various stages, and a corresponding record is generated when a maximum value of the electrochemical impedance change (e.g., $\Delta Rb = Rb_x - Rb_N > Rb_{preset}$) in the lithium battery exceeds a preset value.

Table 5

| Record | Charge cycles | Battery voltage | $\Delta Rb$ | $\Delta Z_{sei}$ | $\Delta Z_{ct}$ | $\Delta Z_w$ |
|---|---|---|---|---|---|---|
| Y | $N^{th}$ to $X^{th}$ | 3.3V (Imax) | $B_{1y\_3.3}$ | $B_{2y\_3.3}$ | $B_{3y\_3.3}$ | $B_{4y\_3.3}$ |
| | | ⋮ | ⋮ | ⋮ | ⋮ | ⋮ |
| | | 4.35V (Imax) | $B_{1y\_4.35}$ | $B_{2y\_4.35}$ | $B_{3y\_4.35}$ | $B_{4y\_4.35}$ |

In table 5, $\Delta Rb$ represents a variation value of the electrolyte impedance, $\Delta Z_{sei}$ represents a variation value of the separator impedance, $\Delta z_{ct}$ represents a variation value of the charge transfer impedance, and $\Delta Z_w$ represents a variation value of the diffusion impedance; B represents the corresponding variation value, for example, $B_{1y\_3.3}$ represents a variation value of the electrolyte impedance in record Y at a battery voltage of 3.3V, $B_{2y\_3.3}$ represents a variation value of the separator impedance in record Y at a battery voltage of 3.3V, $B_{3y\_3.3}$ represents a variation value of the charge transfer impedance in record Y at a battery voltage of 3.3V, and $B_{4y\_3.3}$ represents a variation value of the diffusion impedance in record Y at a battery voltage of 3.3V; and the record Y corresponds to the $N^{th}$ to $X^{th}$ charge cycles, representing one record of an electrochemical impedance change from the $N^{th}$ to $X^{th}$ charge cycles.

Temperature changes of the environment where the lithium battery is located may affect transfer of charges inside the battery and deintercalation of lithium ions in an electrode active material. In a natural environment with an initial temperature of 25 °C, and with reference to the impedance spectrum table (impedance spectrum data sub-model) established in table 4, correction parameters of the impedances corresponding to different temperatures in the whole aging process are determined to establish a temperature-associated data sub-model, as shown in table 6.

Table 6

| Record | Battery voltage | $Rb(m\Omega)$ | $Z_{sei}(m\Omega)$ | $Z_{ct}(m\Omega)$ | $Z_w(m\Omega)$ |
|---|---|---|---|---|---|
| M | 3.3V | $K_{1m\_3.3}$ | $K_{2m\_3.3}$ | $K_{3m\_3.3}$ | $K_{4m\_3.3}$ |
| | ⋮ | ⋮ | ⋮ | ⋮ | ⋮ |
| | 4.35V | $K_{1m\_4.35}$ | K2m 4.35 | K3m 4.35 | K4m 4.35 |

In table 6, Rb represents the electrolyte impedance, $Z_{sei}$ represents the separator impedance, $Z_{ct}$ represents the charge transfer impedance, and $Z_w$ represents the diffusion impedance; and K represents the corresponding correction parameter, for example, $K_{1m\_3.3}$ represents a correction parameter for the electrolyte impedance in record M at a battery voltage of 3.3V, $K_{2m\_3.3}$ represents a correction parameter for the separator impedance in record M at a battery voltage of 3.3V, $K_{3m\_3.3}$ represents a correction parameter for the charge transfer impedance in record M at a battery voltage of 3.3V, and $K_{4m\_3.3}$ represents a correction parameter for the diffusion impedance in record M at a battery voltage of 3.3V.

Based on table 6 and in combination with the corresponding $N^{th}$ charging process in table 4, an adjustment proportion of the electrochemical impedance of the lithium battery along with the ambient temperature, i.e., the electrochemical correction parameter K of the lithium battery in the $N^{th}$ charging process at an ambient temperature $\theta$ °C, can be obtained.

The correction is made by:

$$K_m \times \left( \frac{\theta - 25}{25} \right) = \frac{Z'(\theta) - Z}{Z}$$

where $K_m$ is a correction parameter, $\theta$ is the present ambient temperature, Z represents the preset impedance value in the impedance spectrum data sub-model, and $Z'(\theta)$ is the corrected preset impedance value.

Third Exemplary Embodiment

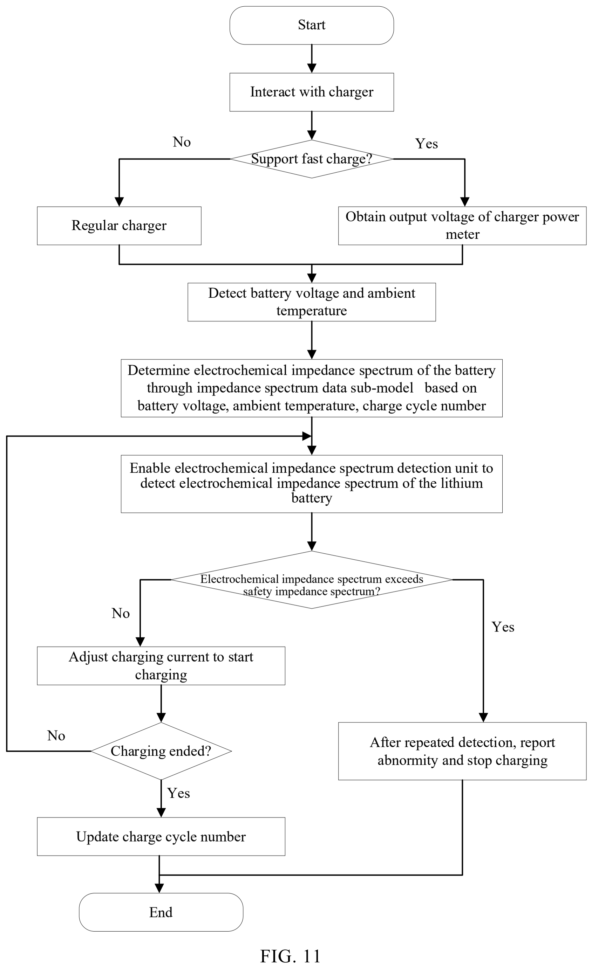

FIG. 11 is a schematic flowchart of charging control according to the embodiment. After the charger is plugged in, the charging process is started. The charging management unit of the terminal interacts with the charger to judge whether the plugged charger supports fast charge. If the interaction is successful, it indicates that the charger supports fast charge for the terminal, and the charging management unit obtains the maximum charging power and output voltage supported by the charger. If the interaction is failed, the charger is defaulted to a regular charger, e.g., the charger has an output voltage of 5V. In this embodiment, failed interaction may also occur when a protocol supported by the charger is not compatible with a protocol supported by the terminal, in which case the charger is also defaulted to a regular charger.

After determining the power output capability of the charger, the charging management unit detects a voltage of the lithium battery and an ambient temperature at a surface of the lithium battery. Based on the battery voltage and the charge cycle number, an electrochemical impedance spectrum consisting of preset impedance values of an impedance parameter set before the lithium battery is charged can be obtained from the impedance spectrum data sub-model shown in table 4. For example, if a present charge cycle number of the lithium battery is 22, and a present battery voltage is 3.5V, based on the impedance spectrum data sub-model shown in table 4, a present electrochemical impedance spectrum of the lithium battery is obtained as: $Rb=A_{122\_3.5}=30m\Omega$, $Z_{sei}=A_{222\_3.5}=40m\Omega$, $Z_{ct}=A_{322\_3.5}=50m\Omega$, and $Z_w=A_{222\_3.5}=70m\Omega$. The ambient temperature at the surface of the lithium battery may be obtained by a thermistor on a lithium battery protection board or the like. Referring the impedance spectrum data sub-model shown in table 4 and the temperature-associated data sub-model shown in table 6, a correction parameter Km is determined, and an electrochemical impedance spectrum $Z'(\theta)$ of the lithium battery at a present temperature is calculated. For example, the ambient temperature is 30°C, and the corresponding correction parameter $K_{m\_3.5}=1.1$, then the electrochemical impedance spectrum consisting of the corrected preset impedance values is: $Rb'=A_{122\_3.5}=36.6m\Omega$, $Z_{sei}'=A_{222\_3.5}=48.8m\Omega$, $Z_{ct}'=A_{322\_3.5}=61m\Omega$, and $Z_w'=A_{222\_3.5}=85.4m\Omega$. Meanwhile, the charging management unit enables the electrochemical impedance spectrum detection unit to detect the electrochemical impedance spectrum of the lithium battery. If the detected electrochemical impedance of the lithium battery exceeds a safety impedance, the detection is repeated for several times (for example, not less than 3 times), and if the electrochemical impedance spectrum of the lithium battery is determined to exceed the safety impedance spectrum $Z_{safety}$ for multiple times, an abnormity is reported, and the charging is stopped. The safety impedance spectrum may be provided by the battery manufacturer, or may be an empirical value. For example, when charging is performed at a minimum current, an electrochemical impedance spectrum when the temperature rise approaches an allowable operating temperature threshold of the lithium battery is taken as the safety impedance spectrum: $Rb_{safety}=60m\Omega$, $Z_{sei\ safety}=80m\Omega$, $Z_{ct\ safety}=100m\Omega$, and $Z_{w\ safety}=150m\Omega$.

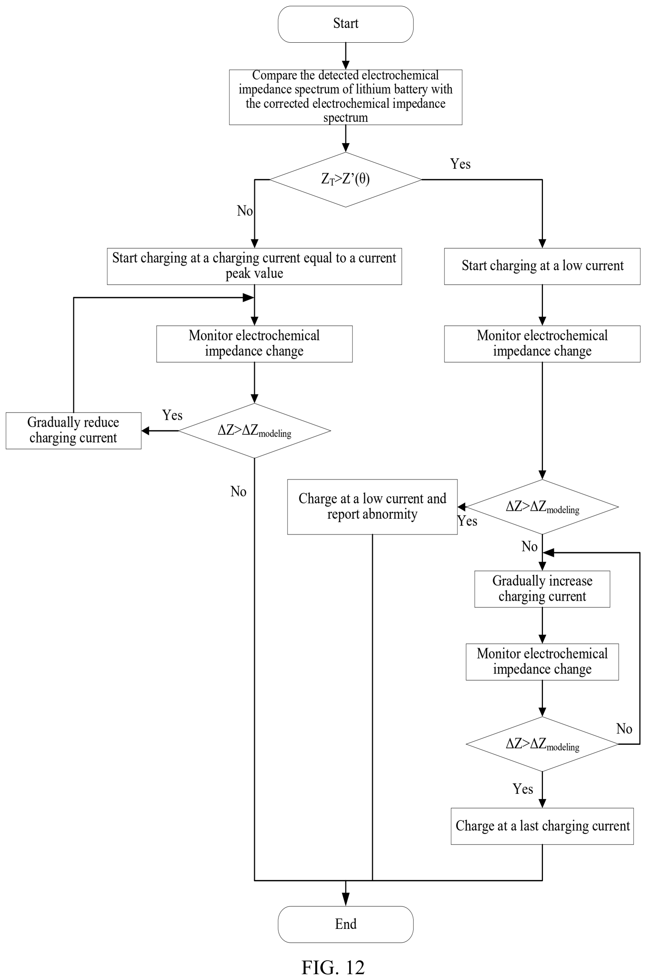

The charging management unit starts charging only when the electrochemical impedance spectrum of the lithium battery is detected to be within the safety impedance spectrum range, and the charging current adjustment scheme is shown in FIG. 12. If the present electrochemical impedance spectrum $Z_T$ of the lithium battery is lower than the corrected electrochemical impedance spectrum $Z'(\theta)$ of the lithium battery, charging is started at a charging current equal to a current peak value. The current peak value is a smaller one of a maximum value of the current converted and output by the terminal from the charging power supplied by the charger, or a maximum value of the charging current allowed by the charging curve of the battery. The power conversion unit mainly enables fast charge in three modes: inductive power conversion, a direct-charging load switch, and a half-voltage switched capacitor array. The direct-charging load switch and the half-voltage switched capacitor array enables higher conversion efficiencies, while the output current and the input current are in a linear proportional relation. In a fast charge process, the charging management unit detects the electrochemical impedance of the lithium battery regularly to monitor the electrochemical impedance change $\Delta Z$ of the lithium battery during the charging process. If the electrochemical impedance change $\Delta Z$ of the lithium battery exceeds the electrochemical impedance change $\Delta Z_{modeling}$ of the lithium battery in the charging process at the maximum current, the charging current needs to be gradually reduced until the electrochemical impedance change of the lithium battery in the fast charge process does not exceed a variation value of the modeled electrochemical impedance of the lithium battery in the charging process. $\Delta Z_{modeling}$ may be obtained from the impedance change data sub-model shown in table 5.

If the present electrochemical impedance spectrum $Z_T$ of the lithium battery exceeds the corrected electrochemical impedance spectrum $Z'(\theta)$ of the lithium battery, charging is started at a low current, such as a 0.2C rate charging current. Meanwhile, the charging management unit detects the electrochemical impedance change $\Delta Z$ of the lithium battery during the low-current charging. If the electrochemical impedance change $\Delta Z$ of the lithium battery exceeds $\Delta Z_{modeling}$ during the low-current charging, it indicates that the lithium battery is deteriorated internally, and for safety considerations, the charging management unit reports an abnormality and stops charging. If the electrochemical impedance change $\Delta Z$ of the lithium battery is lower than $\Delta Z_{modeling}$, the charging current is gradually increased while the electrochemical impedance change of the lithium battery is detected, until the electrochemical impedance change $\Delta Z$ of the lithium battery exceeds $\Delta Z_{modeling}$, and then a last charging current is restored. It is possible to increase the charging current to the supportable maximum charging current (i.e., the current output by the power conversion unit from the charging power supplied by the charger, or the charging current allowed by the charging curve of the lithium battery), and the electrochemical impedance change $\Delta Z$ of the lithium battery is lower than $\Delta Z_{modeling}$. In this case, the charging current is kept at the maximum charging current until the charging is ended.

After the current is adjusted according to the above method and the charging is completed, the charging management unit updates the charge cycle number, i.e., the aging degree of the lithium battery.

In the charging control method provided in the embodiments of the present disclosure, a present impedance value of an impedance parameter set of the battery is monitored and compared with the preset impedance parameter value in the electrochemical impedance spectrum data model, so that a change in the internal state of the battery can be determined and used to adjust the charging current, and a charging current which can not only reduce safety risks caused by deterioration of the internal state of the battery, but also minimize the charging time can be obtained, thereby implementing fast charge while ensuring the battery life and safety.

Those of ordinary skill in the art will appreciate that all or some operations of the above described method, function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

**Claims**

1.  A charging control method, comprising:

    obtaining a present impedance value of an impedance parameter set of a battery, wherein the impedance parameter set comprises at least one impedance parameter;
    determining, based on charging state information of the battery, a present index in an electrochemical impedance spectrum data model;
    comparing the present impedance value with a preset impedance parameter value corresponding to the present index, wherein the electrochemical impedance spectrum data model comprises preset impedance parameter values of the impedance parameter set corresponding to different indexes; and
    determining a charging current based on a comparison result.

2.  The charging control method according to claim 1, wherein comparing the present impedance value with the preset impedance parameter value corresponding to the present index comprises:

    determining, based on the present impedance value, a present impedance change value of the impedance parameter set; and
    comparing the present impedance change value with a preset impedance change value corresponding to the present index, wherein the electrochemical impedance spectrum data model comprises an impedance change data sub-model in which the preset impedance parameter value comprises the preset impedance change value.

3.  The charging control method according to claim 2, wherein determining the charging current based on the comparison result comprises:

    reducing the charging current under the condition that a present impedance change value of at least one impedance parameter in the impedance parameter set exceeds a preset impedance change value of the at least one impedance parameter corresponding to the present index; or
increasing the charging current under the condition that a present impedance change value of each impedance parameter in the impedance parameter set does not exceed a preset impedance change value of the impedance parameter corresponding to the present index.

4. The charging control method according to claim 3, wherein increasing the charging current under the condition that the present impedance change value of each impedance parameter in the impedance parameter set does not exceed the preset impedance change value of the impedance parameter corresponding to the present index comprises:
under the condition that the charging current is increased to a current peak value, and the present impedance change value of each impedance parameter in the impedance parameter set does not exceed the preset impedance change value of the impedance parameter corresponding to the present index, keeping the charging current at the current peak value.

5. The charging control method according to claim 2, wherein determining the charging current based on the comparison result comprises:
under the condition that the charging current is equal to a current peak value when charging is started, reducing the charging current under the condition that a present impedance change value of at least one impedance parameter in the impedance parameter set exceeds a preset impedance change value of the at least one impedance parameter corresponding to the present index.

6. The charging control method according to claim 2, wherein determining the charging current based on the comparison result comprises:

under the condition that the charging current is lower than a current peak value when charging is started, increasing the charging current under the condition that a present impedance change value of each impedance parameter in the impedance parameter set does not exceed a preset impedance change value of the impedance parameter corresponding to the present index; or
under the condition that the charging current is lower than a current peak value when charging is started, stopping charging under the condition that a present impedance change value of at least one impedance parameter in the impedance parameter set exceeds a preset impedance change value of the at least one impedance parameter corresponding to the present index.

7. The charging control method according to any one of claims 1 to 6, wherein comparing the present impedance value with the preset impedance parameter value corresponding to the present index comprises:
comparing the present impedance value with a preset impedance value corresponding to the present index, wherein the electrochemical impedance spectrum data model comprises an impedance spectrum data sub-model in which the preset impedance parameter value comprises the preset impedance value.

8. The charging control method according to claim 7, wherein comparing the present impedance value with the preset impedance value corresponding to the present index comprises:

obtaining a present ambient temperature of the battery;
determining a correction parameter corresponding to the present ambient temperature and the present index in a temperature-associated data sub-model, wherein the electrochemical impedance spectrum data model comprises the temperature-associated data sub-model, and the temperature-associated data sub-model comprises correction parameters corresponding to different ambient temperatures and different indexes;
correcting the preset impedance value corresponding to the present index based on the correction parameter corresponding to the present ambient temperature and the present index; and
comparing the present impedance value with the corrected preset impedance value corresponding to the present index.

9. The charging control method according to claim 8, wherein determining the charging current based on the comparison result comprises:

under the condition that a present impedance value of each impedance parameter in the impedance parameter set is smaller than a corrected preset impedance value of the impedance parameter corresponding to the present index, making the charging current equal to a current peak value when charging is started; or

under the condition that a present impedance value of at least one impedance parameter in the impedance parameter set is greater than a corrected preset impedance value of the at least one impedance parameter corresponding to the present index, making the charging current less than the current peak value when charging is started.

10. The charging control method according to any one of claims 1 to 6, wherein after obtaining the present impedance value of the impedance parameter set of the battery, the charging control method further comprises:

comparing the present impedance value with a safety impedance value;
stopping charging under the condition that a present impedance value of at least one impedance parameter in the impedance parameter set exceeds a safety impedance value corresponding to the at least one impedance parameter; and
starting charging under the condition that a present impedance value of each impedance parameter in the impedance parameter set does not exceed a safety impedance value corresponding to the impedance parameter.

11. The charging control method according to any one of claims 1 to 6, wherein index in the electrochemical impedance spectrum data model comprises at least one of a battery voltage and a charge cycle number; and determining the present index based on the charging state information of the battery comprises:
determining at least one of a present battery voltage and a present charge cycle number of the battery to obtain the present index.

12. The charging control method according to claim 11, wherein the index in the electrochemical impedance spectrum data model comprises a charge cycle number; and the charging control method further comprises:

obtaining the present charge cycle number when charging is started; and/or
updating the present charge cycle number when the charging is completed.

13. The charging control method according to any one of claims 1 to 6, wherein the impedance parameter forming the impedance parameter set comprise at least one of an electrolyte impedance, a separator impedance, a charge transfer impedance, and a diffusion impedance.

14. The charging control method according to any one of claims 1 to 6, wherein the charging control method further comprises:
obtaining preset impedance parameter values of the impedance parameter set corresponding to different indexes to establish the electrochemical impedance spectrum data model.

15. The charging control method according to claim 14, wherein obtaining the preset impedance parameter values of the impedance parameter set corresponding to different indexes to establish the electrochemical impedance spectrum data model comprises:

obtaining preset impedance values of the impedance parameter set corresponding to different charge cycle numbers and different battery voltages, to establish an impedance spectrum data sub-model; and
establishing an impedance change data sub-model based on the impedance spectrum data sub-model, wherein the impedance change data sub-model comprises preset impedance change values of the impedance parameter set corresponding to different charge cycle numbers and different battery voltages.

16. The charging control method according to claim 15, wherein obtaining the preset impedance parameter values of the impedance parameter set corresponding to different indexes to establish the electrochemical impedance spectrum data model further comprises:
establishing a temperature-associated data sub-model based on the impedance spectrum data sub-model, wherein the temperature-associated data sub-model comprises correction parameters corresponding to different ambient temperatures and different battery voltages.

17. A terminal, comprising:

one or more processors; and
a storage device having one or more programs stored thereon which, when executed by the one or more processors, cause the one or more processors to implement the charging control method according to any one of claims 1 to 16.

18. A computer readable medium having a computer program stored thereon which, when executed by a processor, causes the charging control method according to any one of claims 1 to 16 to be implemented.

S1

Obtain a present impedance value of an impedance parameter set of a battery, where the impedance parameter set includes at least one impedance parameter

S2

Determine, based on charging state information of the battery, a present index in an electrochemical impedance spectrum data model

S3

Compare the present impedance value with a preset impedance parameter value corresponding to the present index, where the electrochemical impedance spectrum data model includes preset impedance parameter values of the impedance parameter set corresponding to different indexes

S4

Determine a charging current based on a comparison result

FIG. 1

S311

Determine, based on the present impedance value, a present impedance change value of the impedance parameter set

S312

Compare the present impedance change value with a preset impedance change value, where the electrochemical impedance spectrum data model includes an impedance change data sub-model

S411

Reduce the charging current under the condition that a present impedance change value of at least one impedance parameter in the impedance parameter set exceeds a preset impedance change value of the at least one impedance parameter corresponding to the present index

S412

Increase the charging current under the condition that a present impedance change value of each impedance parameter in the impedance parameter set does not exceed a preset impedance change value of the impedance parameter corresponding to the present index

FIG. 2

S321

Obtain a present ambient temperature of the battery

S322

Determine a correction parameter corresponding to the present ambient temperature and the present index in a temperature-associated data sub-model

S323

Correct the preset impedance value corresponding to the present index based on the correction parameter corresponding to the present ambient temperature and the present index

S324

Compare the present impedance value with the corrected preset impedance value corresponding to the present index

S421

Under the condition that the present impedance value of each impedance parameter in the impedance parameter set is smaller than the corrected preset impedance value of the impedance parameter corresponding to the present index, make the charging current equal to a current peak value when charging is started

S422

Under the condition that the present impedance value of at least one impedance parameter in the impedance parameter set is greater than the corrected preset impedance value of the at least one impedance parameter corresponding to the present index, make the charging current less than the current peak value when charging is started

FIG. 3

S1

Obtain a present impedance value of an impedance parameter set of a battery, where the impedance parameter set includes at least one impedance parameter

S51

Compare the present impedance value with a safety impedance value

S52

Report an abnormity and stop charging under the condition that a present impedance value of at least one impedance parameter in the impedance parameter set exceeds the safety impedance value corresponding to the at least one impedance parameter

S53

Start charging under the condition that a present impedance value of each impedance parameter in the impedance parameter set does not exceed the safety impedance value corresponding to the impedance parameter

S2

Determine, based on charging state information of the battery, a present index in an electrochemical impedance spectrum data model

S3

Compare the present impedance value with a preset impedance parameter value corresponding to the present index, where the electrochemical impedance spectrum data model includes preset impedance parameter values of the impedance parameter set corresponding to different indexes

S4

Determine a charging current based on a comparison result

FIG. 4

FIG. 5

FIG. 6

S6

Obtain preset impedance parameter values of the impedance parameter set corresponding to different indexes to establish the electrochemical impedance spectrum data model

S1

Obtain a present impedance value of an impedance parameter set of a battery, where the impedance parameter set includes at least one impedance parameter

S2

Determine, based on charging state information of the battery, a present index in an electrochemical impedance spectrum data model

S3

Compare the present impedance value with a preset impedance parameter value corresponding to the present index, where the electrochemical impedance spectrum data model includes preset impedance parameter values of the impedance parameter set corresponding to different indexes

S4

Determine a charging current based on a comparison result

FIG. 7

103                                          102

| I/O Interface | | Storage device |

104

| Processor |

101

FIG. 8

| Computer readable medium |

FIG. 9

FIG. 10

FIG. 11

FIG. 12

## INTERNATIONAL SEARCH REPORT

| International application No. |
|---|
| **PCT/CN2024/097217** |

### A. CLASSIFICATION OF SUBJECT MATTER

H02J 7/00(2006.01)i;  H01M 10/44(2006.01)i

According to International Patent Classification (IPC) or to both national classification and IPC

### B. FIELDS SEARCHED

Minimum documentation searched (classification system followed by classification symbols)

IPC: H02J, H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 充电, 电池, 阻抗, 参数, 电化学, 索引, 比较, 电流, 预设, 模型, 值, 温度, 电压, 次数, 终端, 处理器, 存储器, 介质; charge, battery, impedance, parameter, electrochemistry, index, compare, current, preset, model, value, temperature, voltage, number, terminal, processor, memory, medium

### C. DOCUMENTS CONSIDERED TO BE RELEVANT

| Category* | Citation of document, with indication, where appropriate, of the relevant passages | Relevant to claim No. |
|---|---|---|
| Y | CN 113258151 A (TONGJI UNIVERSITY) 13 August 2021 (2021-08-13) description, paragraphs 8-49, and figures 1-5 | 1-7, 10-15, 17-18 |
| Y | CN 115524625 A (XI'AN JIAOTONG UNIVERSITY) 27 December 2022 (2022-12-27) description, paragraphs 4-135, and figures 1-7(e) | 1-7, 10-15, 17-18 |
| Y | CN 112865326 A (ZHUHAI ISMARTWARE TECHNOLOGY CO., LTD.) 28 May 2021 (2021-05-28) description, paragraphs 3-49, and figures 1-2 | 17-18 |
| A | US 2021391741 A1 (BLACK & DECKER INC.) 16 December 2021 (2021-12-16) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 August 2024** | **23 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/097217**

| Patent document cited in search report | | | Publication date (day/month/year) | Patent family member(s) | | | Publication date (day/month/year) |
|---|---|---|---|---|---|---|---|
| CN | 113258151 | A | 13 August 2021 | None | | | |
| CN | 115524625 | A | 27 December 2022 | None | | | |
| CN | 112865326 | A | 28 May 2021 | None | | | |
| US | 2021391741 | A1 | 16 December 2021 | US | 11936228 | B2 | 19 March 2024 |

Form PCT/ISA/210 (patent family annex) (July 2022)

**EP 4 645 638 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202310714508 A